# EUROPÄISCHE PATENTSCHRIFT

(11) **EP 0 642 281 B1**
(45) Veröffentlichungstag und Bekanntmachung des Hinweises auf die Patenterteilung: **05.04.2000**
(21) Anmeldenummer: 94110107.3
(22) Anmeldetag: 29.06.1994
(51) Int. Cl.: H04Q 3/62, H04Q 3/42

(54) **Kommunikationssystem mit Teilnehmeranschlüssen für Zweiwahlverfahren**
Communication system with dual dial-mode subscriber stations
Système de commutation pour stations d'abonné avec double mode de numérotation

(30) Priorität: 29.07.1993 DE 4325544
(43) Veröffentlichungstag der Anmeldung: 08.03.1995
(73) Patentinhaber: SIEMENS AKTIENGESELLSCHAFT, 80333 München (DE)
(72) Erfinder: Fink, Günter, D-51145 Köln (DE); Georg, Detlef, D-51147 Köln (DE)

(56) Entgegenhaltungen:
- EP-A- 0 213 373
- EP-A- 0 286 794
- EP-A- 0 395 755
- EP-A- 0 454 421
- PATENT ABSTRACTS OF JAPAN vol. 015, no. 343 (E-1106), 30.August 1991 & JP 03 132240 A (TOSHIBA CORP), 5.Juni 1991,

## Beschreibung

Die Erfindung betrifft ein Kommunikationssystem siehe hierzu auch EP-A-0 213 373, insbesondere ein kleines Kommunikationssystem mit einer speicherprogrammierten Systemsteuerung, durch die leistungsmerkmalsspezifische Steuerprozeduren, wie z.B. eine Rückfrageprozedur, steuerbar sind und mit Speichereinheiten, in denen Informationen über die daran angeschlossenen und wahlweise miteinander oder mit einer Amtsleitung zu verbindenden Fernsprechendgeräte und der jeweils aktuelle Zustand eines Endgerätes einspeicherbar ist, und wobei Fernsprechendgeräte anschließbar sind, die sich hinsichtlich des entweder als Impulswahlverfahren oder als Mehrfrequenzcode-Wahlverfahren realisierten Wahlverfahrens voneinander unterscheiden, und wobei bei einem Endgerät mit Impulswahlverfahren, bei dem keine Erdindikation realisiert ist, eine Rückfrage durch Wahl mindestens einer Kennziffer und bei einem Fernsprechendgerät mit Mehrfrequenzcode-Wahlverfahren durch die Betätigung einer Signaltaste einleitbar ist.

Solche programmgesteuerten Kommunikationssysteme dienen zur Verbindung von Endgeräten untereinander und zur Verbindung dieser Endgeräte mit an Kommunikationsnetze, insbesondere an öffentliche Kommunikationsnetze, angeschlossenen Endgeräten. Auch sogenannte kleine Kommunikationssysteme sind nicht nur zur eigentlichen Vermittlungssteuerung, sondern auch zu einer Steuerung bzw. Realisierung zusätzlicher, über den Vermittlungsvorgang hinausgehender Steuervorgänge befähigt. Durch diese zusätzlichen Steuervorgänge lassen sich u.a. unterschiedliche Leistungsmerkmale realisieren. Das Kommunikationssystem besteht im Prinzip aus einer Vielzahl von vermittlungstechnischen Funktionseinheiten, die von dem Rechnersystem gesteuert werden und wobei dieses Rechnersystem alle vermittlungstechnischen Abläufe überwacht. Hierzu muß es mit Informationen über den Betriebszustand der Funktionseinheiten und über Zustandsänderungen, insbesondere über Eingaben an den angeschlossenen Endgeräten, informiert werden. Für die Steuerung der erforderlichen Abläufe greift das Rechnersystem auf Informationen zu, die in entsprechenden Speichereinheiten abgespeichert sind. Für die Realisierung von leistungsmerkmalsspezifischen Steuerprozeduren beinhaltet das Rechnersystem einzelne Programmsteuerungen, die sich beispielsweise der diesbezüglich in der Speichereinrichtung enthaltenen Steuerdaten bedienen. Zu den in einem solchen Kommunikationssystem realisierbaren Leistungsmerkmalen zählen beispielsweise die selbsttätige Rufweiterleitung, die Rufübernahme, die Rückfrage zu einer anderen Teilnehmerstelle und die bei einer externen Verbindung damit verknüpfte Überführung dieser externen Leitung in den Haltezustand. Es wird von einem Kommunikationssystem ausgegangen, an das Fernsprechendgeräte anschließbar sind, die sich in dem ihnen jeweils zugrundeliegenden Wahlverfahren voneinander unterscheiden. Dieses zugeordnete Wahlverfahren kann entweder als Impulswahlverfahren oder als Mehrfrequenzcode-Wahlverfahren realisiert sein. Im ersten Fall werden die Wahlziffern aufgrund von Schleifenunterbrechungen gebildet, die eine beispielsweise in der Teilnehmerschaltung enthaltene Indikationsstelle beeinflussen. Deren Zustand wird dann jeweils durch die Steuereinrichtung, z.B. durch eine entsprechende Scannung, festgestellt. Beim Mehrfrequenzcode-Wahlverfahren wird bei der Betätigung einer Taste der am Endgerät vorhandenen Tastatur ein Wählzeichen durch die Kombination von Frequenzen aus mindestens zwei Frequenzgruppen gebildet. Die aufgrund einer solchen Tastwahlmöglichkeit ausgesendeten Wählzeichen werden durch sogenannte Codeempfänger ausgewertet und der festgestellte Ziffernwert der Systemsteuerung zur weiteren Verarbeitung übergeben. Für die Auswahl der beim Impulswahlverfahren in der geschilderten Weise abgegebenen Wahlinformationen wird ein entsprechender Prozeßablauf aktiviert.

Insbesondere bei kleinen Kommunikationssystemen wird angestrebt, die Herstellungskosten zu reduzieren. Einen Anteil an einer solchen Reduzierung liefert die Tatsache, daß in der Anschlußschaltung eines Teilnehmers keine Erdindikation vorgenommen wird. Das bedeutet, daß ein solcher Impulswahlteilnehmer eine Rückfrage während eines kommend angenommenen Gespräches nicht - wie sonst üblich - durch die Betätigung einer Erdtaste einleiten kann, sondern er wählt für diese Einleitung unmittelbar eine Kennzahl, die beispielsweise mit der Rufnummer eines gewünschten weiteren internen Teilnehmers übereinstimmt. Ein Teilnehmer, dem ein Fernsprechendgerät mit Mehrfrequenzcode-Wahlverfahren zugeordnet ist, betätigt üblicherweise für die Einleitung einer Rückfrage eine Signaltaste, die sogenannte Flash-Taste. Damit wird dann eine definierte Schleifenunterbrechung erzielt, wobei sich aufgrund des für diese Schleifenunterbrechung möglichen Toleranzbereiches eine zeitliche Überschneidung mit der durch einen Wählimpuls ausgelösten Schleifenunterbrechung ergibt. Das bedeutet, daß bei einem bilingualen Teilnehmeranschluß, bei dem sich also teilnehmerseitig das System auf das Wahlverfahren des Fernsprechendgerätes einstellt, bei einer gewünschten Rückfrage bei einer kommend angenommenen Gesprächsverbindung das aktuelle Wahlverfahren des jeweiligen Fernsprechendgerätes unter den geschilderten Voraussetzungen nicht festgestellt werden kann.

Es ist die Aufgabe der Erfindung, auch bei fehlender Erdindikation das Wahlverfahren desjenigen Endgerätes, von dem aus während eines kommend angenommenen Gespräches eine Rückfrageverbindung aufgebaut werden soll, in einfacher Weise festzustellen.

Die Lösung dieser Aufgabe erfolgt erfindungsgemäß mit den kennzeichnenden Merkmalen des Patentanspruches 1. Als wesentlich für die Erfindung ist anzusehen, daß bei einer nach dem tatsächlichen Anschluß des Fernsprechendgerätes erfolgenden Eingangsbelegung aufgrund des Ansprechens eines der beiden gleichzeitig für die in Rede stehenden Wahlverfahren zur Verfügung gestellten Auswertungen das dem betreffenden Endgerät zugeordnete Wahlverfahren durch die Steuerung erkannt wird. Nach dem Einspeichern eines hierfür jeweils charakteristischen Kennzeichens kann das System bei einem kommend angenommenen Gespräch, insbesondere bei einem Externgespräch, auf diesen Eintrag zurückgreifen, um beim Einleiten einer Rückfrage zu entscheiden, ob ein Mehrfrequenzcodeempfänger angeschaltet werden muß oder ob eine Impulswahlaufnahme erfolgt. In letzterem Fall würden dann die den Prozeß dieser Wahlaufnahme entsprechenden Steuerungs- und Bearbeitungsprozeduren aufgerufen werden. Mit jeder durch dieses betreffende Fernsprechendgerät vorgenommenen Eingangsbelegung besteht die Möglichkeit, den Eintrag des Kennzeichens zu aktualisieren. Das bedeutet, daß bei einem eventuell vorgenommenen Austausch des Fernsprechendgerätes durch ein Fernsprechendgerät der anderen Art im Wahlverfahren das ursprünglich abgespeicherte Kennzeichen gelöscht und mit dem dem neuen Wahlverfahren zugeordneten Kennzeichen überschrieben wird. Auf diesen Eintrag kann dann nach einer vorgenommenen erstmaligen gehenden Wahl, mit dem das Wahlverfahren wiederum erkannt wird, jederzeit durch die Steuerung zurückgegriffen werden. Damit ist in einfacher Weise das Problem der Einleitung einer Rückfrage nach kommend angenommenen Gesprächsverbindungen unter den eingangs genannten Voraussetzungen gelöst. Diese Einträge erfolgen erfindungsgemäß vollautomatisch, so daß die Wirksamkeit des bilingualen Anschlusses in jedem Fall sichergestellt ist. Dies erfolgt also ohne die Notwendigkeit einer sogenannten "Bedienungsoberfläche", über die der das jeweilige charakteristische Kennzeichen aufnehmende Speicherplatz beeinflußt werden kann. Eine derartige Konfigurationsmöglichkeit kann beispielsweise lediglich für die Einstellung des amtsseitigen Wahlverfahrens vorgegeben sein.

Erfindungsgemäß wird zur Abspeicherung des jeweiligen Kennzeichens für die jeweilige Wahlart ein Speicherplatz eines nichtflüchtigen Speichers herangezogen. Vorteilhafterweise könnte hierzu ein sogenannter E²-Speicher Verwendung finden, da dieser nicht batteriegestützt werden muß. Dies ist im Sinne einer Kostenminimierung vorteilhaft.

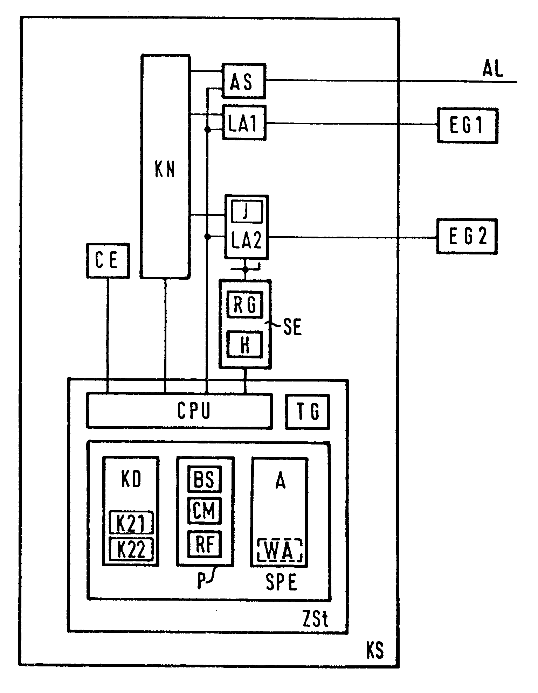

Die Erfindung wird im folgenden anhand eines figürlich dargestellten Ausführungsbeispiels erläutert. In der Figur ist die Struktur eines kleinen Kommunikationssystems schematisch dargestellt. Es sind lediglich die zum Verständnis der Erfindung notwendigen Komponenten gezeigt.

Das Kommunikationssystem KS kann beispielsweise ein digitales kleines Nebenstellenkommunikationssystem darstellen, an das u.a. mehrere Fernsprechendgeräte EG anschließbar sind. Von diesen Endgeräten sind stellvertretend lediglich die Fernsprechendgeräte EG1 und EG2 gezeigt. Dem Fernsprechendgerät EG1 soll das Mehrfrequenzcode-Wahlverfahren und dem Fernsprechendgerät EG2 das Impulswahlverfahren zugrundeliegen. Als Schnittstelleneinrichtungen zu den Endgeräten sind in Abhängigkeit von der Art der angeschlossenen Kommunikationsendgeräte Anschaltebaugruppen LA vorhanden. Der Amtsleitung AL, über die das kleine Kommunikationssystem KS mit dem öffentlichen Kommunikationssystem verbunden ist, wird eine Anschaltebaugruppe AS zugeordnet. Durch diese Anschaltebaugruppen werden u.a. unterschiedliche Signalisierungsinformationen von den Endgeräten oder von dem öffentlichen System auf ein innerhalb des Kommunikationssystems KS einheitlich verwendetes Format umgewandelt. Zur Bestimmung von Leitungszuständen enthalten die Anschaltebaugruppen LA auch Indikationsstellen, die durch die Anlagensteuerung gescannt werden. Eine weitere wesentliche Einheit bildet die Koppeleinrichtung KN, die die Sprechverbindungen zwischen den Endgeräten untereinander oder zwischen den Endgeräten und angeschlossenen Telekommunikationsnetzen durchschaltet. Weiterhin ist eine zentrale Signaleinrichtung SE vorhanden, die neben dem für die Erzeugung der Hörtöne vorgesehenen Modul H ein weiteres Modul RG enthält, das die für die Rufsignalisierung notwendigen Rufwechselspannungen erzeugt. Die Koppeleinrichtung KN steht unter dem Steuereinfluß einer zentralen Anlagensteuerung ZSt, die neben dem zentralen Prozessor CPU eine Speichereinrichtung SPE und eine Takteinheit TG enthält. Der zentrale Prozessor CPU steuert sämtliche Vermittlungsvorgänge und besorgt eine Aufbereitung und Zuteilung der Steuerdaten. Die in der zentralen Systemsteuerung ZSt gebildeten Taktsignale werden in nicht dargestellter Weise über eine Taktleitung an die Anschaltebaugruppen verteilt.

Der zentrale Prozessor CPU hat Zugriff zu den in der Speichereinrichtung SPE abgelegten Informationen. Sie besteht aus mehreren Speicherteilen, wobei in dem Programmspeicher P u.a. das Anlagenbetriebsprogramm BS enthalten ist. Zur Realisierung von leistungsmerkmalsspezifischen Steuerprozeduren greift die zentrale Steuerung auf Steuerdaten zu, die in entsprechenden Modulen, z.B. des Programmspeichers P, enthalten sind. Stellvertretend für diese Module ist das Programmodul RF dargestellt, das zur Durchführung von Rückfrageprozeduren vorgesehen sein soll. Zur Steuerung der für die Aufnahme der Mehrfrequenzcode-Wahlinformationen notwendigen Codeempfänger, von denen lediglich der Codeempfänger CE gezeigt ist, enthält der Programmspeicher ein weiteres Programmodul CM.

In dem Speicherteil KD der Speichereinrichtung SPE sind die Kundendaten, wie z.B. die den einzelnen Endgeräten EG zugeteilten Berechtigungen, abgelegt. Daten, die während eines durch ein Fernsprechendgerät EG initiierten Verbindungsaufbaus aus der sogenannten Datenbasis abgefragt werden, können zumindest teilweise in den Arbeitsspeicher A übernommen werden. Dieser Arbeitsspeicher A dient u.a. der Aufnahme von temporären Daten zur Programmablaufsteuerung.

Fur Fernsprechendgeräte mit Impulswahlverfahren soll voraussetzungsgemäß eine Erdindikation nicht vorgesehen sein. Das bedeutet wiederum, daß ein solcher Teilnehmer eine Rückfrage durch Wahl einer Kennzahl einleitet. Ein solcher Wählimpuls wird beispielsweise durch eine Schleifenunterbrechung von 40 bis 80 ms erkannt. Die Indikation für die betätigte Signaltaste an einem Fernsprechendgerät mit Mehrfrequenzcode-Wahlverfahren entspricht z.B. einer Schleifenunterbrechung von 50 bis 300 ms. Das bedeutet, daß unter der genannten Voraussetzung eine Unterscheidung zwischen einem Wählimpuls und einem durch die erwähnte Signaltastenbetätigung bewirkten Flash-Impuls nicht möglich ist. Es wid deshalb erfindungsgemäß für die Systemsteuerung die Möglichkeit geschaffen, beim Einleiten einer Rückfrage zu entscheiden, ob ein Mehrfrequenzcodeempfänger angeschaltet werden muß oder ob eine Impulswahlaufnahme erfolgen muß. Grundsätzlich wird bei einer jeden an einem angeschalteten Fernsprechendgerät durchgeführten Eingangsbelegung sowohl ein Mehrfrequenzcode-Wahlempfänger CE angeschaltet als auch der Prozeß für die Impulswahlaufnahme aktiviert. Es ist also ein bilingualer Anschluß vorgesehen, so daß ohne eine spezielle Konfigurierung ein Mehrfrequenzcode-Wahlverfahren oder ein Impulswahlverfahren für das betreffende Fernsprechendgerät möglich ist. Diejenige der beiden zur Verfügung gestellten Auswertungen für die Wahlinformationen, die durch die erstmalige Wahl nach einer Eingangsbelegung bei der Inbetriebnahme des Kommunikationssystems anspricht, definiert das Wahlverfahren für das betreffende Fernsprechendgerät. Je nach dem, ob der Codeempfänger CE meldet, daß er die Ziffer erkannt hat oder über den die Impulswahl aufnehmenden Prozeß die Ziffer registriert wird, bildet die Systemsteuerung ein das jeweilige Wahlverfahren charakterisierendes signifikantes Kennzeichen KZ1 bzw. KZ2. Dieses Kennzeichen wird jeweils in einem bestimmten Bereich eines nichtflüchtigen Speichers abgespeichert. Dies könnte beispielsweise, wie es in der Figur angedeutet ist, ein Teilbereich des Kundendatenspeichers KD sein. Im Gegensatz zu den übrigen Eintragungen dieses Speichers, die über eine sogenannte Bedienoberfläche durch betriebstechnische Eingaben einprogrammiert werden, erfolgt die Einspeicherung der charakteristischen Kennzeichen KZ1 z.B. für das Mehrfrequenz-Codewahlverfahren bzw. KZ2 z.B. für das Impulswahlverfahren völlig automatisch. Der Benutzer muß also nicht über eine bestimmte Prozedur dem System die Wahlart mitteilen. Nach der erstmaligen Abgabe einer Wahlinformation kann demnach auf dieses eingespeicherte Datum durch das System jederzeit zurückgegriffen werden. Es wird bei jeder gehenden Gesprächsverbindung die jeweilige Wahlart erkannt und überprüft, ob in dem Speicherplatz, der dem betreffenden Fernsprechendgerät zugeordnet ist, das für diese Wahlart signifikante Kennzeichen KZ1 bzw. KZ2 tatsächlich abgespeichert ist. Besteht eine Abweichung zwischen der aktuell festgestellten Wahlart und dem abgespeicherten Kennzeichen, dann wird dieses Kennzeichen durch das neu ermittelte Kennzeichen überschrieben. Eine solche Änderung des Kennzeichens bzw. eine Neueinschreibung eines solchen Kennzeichens erfolgt also immer dann, wenn ein Fernsprechendgerät mit der einen Wahlart gegen ein Fernsprechendgerät mit der anderen Wahlart ausgewechselt wurde oder wenn ein Endgerät neu an das Kommunikationssystem angeschlossen wurde. Weist das Fernsprechendgerät das Mehrfrequenzcode-Wahlverfahren auf, so soll beispielsweise in der diesem Endgerät zugeordneten Zelle des entsprechenden Speicherteils das hierfür charakteristische Kennzeichen KZ1 eingeschrieben sein. Für ein Fernsprechendgerät mit Impulswahlverfahren würde dann in der individuell zugeordneten Zelle das hierfür charakteristische Kennzeichen KZ2 enthalten sein. Damit liegt dann die jeweils aktuelle Information über die Wahlart vor, auf die die Steuerung zurückgreift, wenn bei einem kommend angenommenen Gespräch eine Rückfrage erfolgen soll.

Die teilnehmerindividuell abgespeicherten und die jeweilige Wahlart definierenden Kennzeichen KZ1 bzw. KZ2 sind wie ein Kundendatenspeicher-Datum vorzugsweise in dem nichtflüchtigen Speicher abgespeichert. So kann man beispielsweise nach einem Netzausfall bei einer kommend angenommenen Gesprächsverbindung sofort eine Rückfrage tätigen. Wenn sich das Kommunikationssystem dann neu initialisiert, was beispielsweise durch einen Reset erfolgt, kann sofort auf diesen hinterlegten Eintrag zurückgegriffen werden. Es besteht die Möglichkeit, den Inhalt des die jeweiligen Wahlarten definierenden Speicherteils WA in einen Arbeitsspeicher zu übertragen. Das ist insbesondere dann sinnvoll, wenn die Datenübertragung vom und zum nichtflüchtigen Speicherbaustein seriell erfolgt. Wird der Inhalt des nichtflüchtigen Speicherteils in den als Hintergrundspeicher dienenden RAM-Bereich des Arbeitsspeichers einkopiert, so ist der Zugriff weniger zeitaufwendig als bei der seriellen Übertragung.

## Patentansprüche

1. Kommunikationssystem, insbesondere kleines Kommunikationssystem, mit einer speicherprogrammierten Systemsteuerung CPU, durch die leistungsmerkmalspezifische Steuerprozeduren (wie z.B. eine Rückfrageprozedur) steuerbar sind und mit Speichereinheiten, in denen Informationen über die daran angeschlossenen und wahlweise miteinander oder mit einer Amtsleitung zu verbindenden Fernsprechendgeräte und der jeweils aktuelle Zustand einspeicherbar ist und wobei Fernsprechendgeräte anschließbar sind, die sich hinsichtlich des entweder als Impulswahlverfahren oder als Mehrfrequenzcodewahlverfahren realisierten Wahlverfahrens voneinander unterscheiden und wobei bei einem Endgerät mit Impulswahlverfahren für das keine Endindikation erfolgt eine Rückfrage durch Wahl mindestens einer Kennziffer und bei einem Fernsprechendgerät mit Mehrfrequenzcodewahlverfahren durch die Betätigung einer Signaltaste einleitbar ist
**dadurch gekennzeichnet,**
daß mit dem Erkennen eines gehenden Verbindungswunsches gleichzeitig sowohl eine Auswertemöglichkeit für Wahlinformationen der einen als auch der anderen der beiden genannten Wahlarten durch die Systemsteuerung zur Verfügung gestellt wird, daß bei Anschluß eines jeden Fernsprechendgerätes (EG1, EG2) bei einer erstmalig gehend aufgebauten Verbindung in Abhängigkeit davon, welche der zur Verfügung gestellten Auswertungen auf das dem Endgerät zugeordnete Wahlverfahren anspricht ein dieses jeweils zutreffende Wahlverfahren charakterisierende Kennzeichen (KZ1) bzw. (KZ2) in einem endgeräteindividuellen Speicherplatz einer Speichereinheit automatisch eingeschrieben wird, daß das mit jeder weiteren gehenden Verbindung in gleicher Weise abgeleitete Kennzeichen mit dem in diesem Speicherplatz endgeräteindividuell eingeschriebenen Kennzeichen verglichen und bei einer Abweichung durch das neu ermittelte Kennzeichen für die andere Wahlart überschrieben wird, daß bei einer vorgenommenen Einleitung einer Rückfrage während eines bestehenden kommend angenommenen Gespräches durch die Abfrage des Speicherplatzinhaltes aufgrund des jeweiligen Kennzeichens, das dem betreffenden Fernsprechendgerät zugeordnete Wahlverfahren durch die Steuerung vorab feststellbar ist, so daß unmittelbar die für dieses Wahlverfahren zuständige Auswertung für die Wahlinformationen zur Verfügung gestellt wird.

2. Kommunikationssystem nach Anspruch 1,
**dadurch gekennzeichnet,**
daß zur Abspeicherung des jeweiligen Kennzeichens für die Wahlart ein Speicherplatz eines nicht flüchtigen Speichers herangezogen wird.

## Claims

1. Communications system, in particular small communications system, having a programmable system controller CPU by means of which the performance-feature-specific control procedures (such as a consultation procedure, for example) can be controlled, and having memory units in which information on the telephone terminals which are connected to said units and are to be connected either to one another or to a trunk line and the respective current state can be stored, and in which it is possible to connect telephone terminals which differ from one another in terms of the dialling method which is implemented either as a pulse dialling method or as a multifrequency code dialling method, and in which, in the case of a terminal with a pulse dialling method for which there is no final indication, a consultation takes place by dialling at least one code number and can be initiated in the case of a telephone terminal with a multifrequency code dialling method by activating a signalling key, characterized in that when an outgoing connection request is recognized, an evaluation possibility for dialling information of each of the two aforesaid dialling methods is made available simultaneously by the system controller, in that, when any telephone terminal (EG1, EG2) is connected, when an outgoing connection is set up for the first time as a function of which of the evaluations which have been made available responds to the dialling method assigned to the terminal, an identifier (KZ1) or (KZ2) which characterizes this respectively applicable dialling method is automatically written to a memory unit in a terminal-specific memory location, in that the identifier which is derived in the same way with each further outgoing connection is compared with the identifier which is written to this memory location on a terminal-specific basis, and in the event of a deviation it is overwritten with the newly determined identifier for the other dialling method, in that when a consultation has been initiated during an existing, accepted incoming call by the interrogation of the memory-location content by means of the respective identifier, the dialling method which is assigned to the respective telephone terminal can be detected in advance by the controller so that the dialling-information evaluation which is responsible for this dialling method is made available immediately.

2. Communications system according to Claim 1, characterized in that a memory location of a non-volatile memory is used to store the respective identifier for the dialling method.

## Revendications

1. Système de communication, notamment petit système de communication, comprenant une commande de système par programme enregistré CPU, permettant de commander des procédures de commande spécifiques de fonctions (comme par ex. une procédure de double-appel), et des unités de mémoire dans lesquelles des informations relatives aux terminaux téléphoniques raccordés à celui-ci et optionnellement à connecter entre eux ou à une ligne principale et à l'état actuel respectif peuvent être mémorisées et des terminaux téléphoniques pouvant être raccordés, qui se différencient les uns des autres en ce qui concerne le procédé de numérotation réalisé soit comme procédé de numérotation par impulsions soit comme procédé de numérotation par code multifréquences, et, avec un terminal utilisant un procédé de numérotation par impulsions pour lequel aucune indication de terre n'est donnée, un double-appel pouvant être déclenché par la numérotation d'au moins un indicatif et pour un termina téléphonique à procédé de numérotation par code multifréquences par l'actionnement d'une touche de signalisation
caractérisé en ce que
avec la reconnaissance d'une demande de communication sortante à la fois une possibilité d'évaluation pour des informations de numérotation de l'un que de l'autre des deux types de numérotation mentionnés est mise simultanément à disposition par la commande de système, en ce que en cas de connexion de chaque termina téléphonique (EG1, EG2) pour une communication sortante établie pour la première fois en fonction de celle des évaluations mises à disposition qui répond au procédé de numérotation affecté au terminal, un indicateur (KZ1) resp. (KZ2) caractérisant ce procédé de numérotation correct respectif est inscrit automatiquement dans un espace mémoire d'une unité de mémorisation individuel à chaque terminal, en ce que l'indicateur dérivé de la même manière avec chaque communication sortante supplémentaire est comparé à l'indicateur inscrit individuellement pour chaque terminal dans cet espace mémoire et, en cas de divergence, est recouvert par le nouvel indicateur déterminé pour l'autre type de numérotation, en ce que lorsqu'un double-appel est déclenché pendant un appel existant entrant pris, la procédure de numérotation affectée au terminal téléphonique correspondant peut être constatée au préalable par la commande en interrogeant le contenu de l'espace mémoire sur la base de l'indicateur respectif, si bien que l'évaluation compétente pour ce procédé de numérotation est mise directement à disposition pour les informations relatives à la numérotation.

2. Système de communication selon la revendication 1,
caractérisé en ce que
un espace mémoire d'une mémoire non volatile est utilisé pour mémoriser le signal respectif pour le type de numérotation.
